# EUROPÄISCHE PATENTSCHRIFT

(11) **EP 3 942 139 B1**
(45) Veröffentlichungstag und Bekanntmachung des Hinweises auf die Patenterteilung: **10.12.2025**
(21) Anmeldenummer: 20714149.0
(22) Anmeldetag: 17.03.2020
(51) Int. Cl.: E05F 15/668, E05F 15/73

(54) **ANTRIEBSANORDNUNG FÜR EINE TORVORRICHTUNG SOWIE TORVORRICHTUNG**
DRIVE ARRANGEMENT FOR GATE DEVICE AS WELL AS GATE DEVICE
UNITÉ D'ENTRAÎNEMENT DE PORTE ET PORTE

(30) Priorität: 21.03.2019 DE 102019107322
(43) Veröffentlichungstag der Anmeldung: 26.01.2022
(73) Patentinhaber: Fraba B.V., 6416 SG Heerlen (NL)
(72) Erfinder: FORTHAUS, Martin, 50829 Köln (DE); MACHILL, Konrad, 50935 Köln (DE)
(74) Vertreter: terpatent PartGmbB
(86) Internationale Anmeldenummer: PCT/EP2020/057333
(87) Internationale Veröffentlichungsnummer: WO 2020/187932

(56) Entgegenhaltungen:
- EP-A1- 0 589 760
- EP-A2- 1 965 018
- EP-B1- 1 426 538
- WO-A1-2009/053996
- DE-A1- 102015 101 248
- DE-A1- 102017 126 124
- DE-U1- 202012 012 478

## Beschreibung

Die Erfindung betrifft eine Antriebsanordnung für eine Torvorrichtung mit mindestens einem Elektromotor, der mit einer Getriebeanordnung gekoppelt ist, die eine Torwelle antreibt, um ein Tororgan der Torvorrichtung von einem geschlossenen Zustand in einen offenen Zustand und vice versa zu überführen. Des Weiteren betrifft die Erfindung eine Torvorrichtung mit einer derartigen Antriebsanordnung.

Antriebsanordnungen für Torvorrichtungen sind aus dem Stand der Technik hinlänglich bekannt. So offenbart die europäische Patentanmeldung EP 1965018 A2 eine derartige Antriebsvorrichtung. Die immer strenger werdenden Sicherheitsanforderungen an kraftbetätigte Torvorrichtungen bedingen aufwendige mechanische oder auch elektronische Anordnungen. So weist die Antriebsanordnung gemäß der EP 1965018 A2 ein selbsthemmendes Getriebe mit Zugfederausgleich auf, dass einer ungewollten Öffnung des Tororgans entgegenwirkt. Auch können zusätzliche Fangvorrichtungen und/oder Bremsen vorgesehen sein, die bei Ausfall von Getriebeteilen eine ungewollte Bewegung des Tororgans verhindern. Es sollte deutlich sein, dass derartige Antriebsanordnungen aufwendig und damit teuer in der Herstellung und Montage sind.

Aus der europäischen Patentschrift EP 0551050 B1 ist ein Exzenter-Zahnradgetriebe bekannt, das eine eindeutige und hochpräzise Führung von orbitierenden Teilen vorsieht. Weitere Exzentergetriebe sind darüberhinaus aus der EP 0 589 760 A1 und der WO 2009/053996 A1 bekannt.

Aufgabe der Erfindung ist es, eine Antriebsanordnung bzw. eine Torvorrichtung mit einer Antriebsanordnung bereitzustellen, die die obengenannten Nachteile auf einfache Weise vermeidet.

Diese Aufgabe wird durch eine erfindungsgemäße Antriebsanordnung dadurch gelöst, dass die Getriebeanordnung als Exzenter-Zahnradgetriebe ausgebildet ist, wobei mindestens zwei orbitierende Zahnscheiben, die durch mindestens eine Exzenterwelle des mindestens einen Elektromotors antreibbar sind, über eine Innenverzahnung auf eine Abtriebswelle, die mit der Torwelle verbunden ist, angreifen, wobei die Zahnscheiben eine an einer Außenseite vorgesehene Innenverzahnung aufweisen, die jeweils teilkreisförmig ausgebildet ist. Hierdurch wird eine besonders einfache, und damit günstig herzustellende Antriebsanordnung bereitgestellt, die eine hochpräzise Getriebeanordnung aufweist, die einerseits aufgrund der hohen Zähnezahl, die in Eingriff stehen, verschleißarm in Vergleich mit gängigen Getriebeanordnungen arbeitet und selbst bei einem auftretenden Verschleiß betriebsbereit ist und durch die Verwendung von mindestens zwei orbitierenden Zahnscheiben den hohen Sicherheitsanforderungen an einen möglichen Getriebeausfall, beispielsweise durch Zahnscheibenbruch, entspricht. Zudem handelt es sich um eine selbsthemmende Getriebeanordnung, die beispielsweise einen Einsatz von Bremsen nicht erfordert. Hierbei kann es, um eine Drehmomenterhöhung zu bewirken durchaus sinnvoll sein, mehrere Elektromotoren einzusetzen.

In einer vorteilhaften Ausführungsform sind die Zahnscheiben gleichläufig oder phasenverschoben angeordnet. Bei einer phasenverschobenen, beispielsweise um einen Winkel von 180° versetzten Anordnung, stehen die Zahnscheiben jeweils mit unterschiedlichen Bereichen der Abtriebswelle in Kontakt, wodurch die Abtriebswelle gleichmäßiger belastet wird.

Gemäß einer besonders vorteilhaften Ausführungsform ist bei einer derartigen Antriebsanordnung eine Torsteuereinrichtung vorgesehen, die steuerungstechnisch zumindest mit dem Elektromotor verbunden ist. Hierdurch ist es möglich, die Antriebsanordnung auf einfache Weise in eine Steuerungsanordnung der gesamten Torvorrichtung einzubinden. In besonders vorteilhafter Weise ist die Torsteuereinrichtung kabellos, beispielsweise über W-LAN, Bluetooth bedienbar bzw. auslesbar. Hierdurch kann neben gewöhnlichen Ansteuerfunktionen auch eine Fernbedienung bzw. Wartung unter zur Hilfenahme von Daten der Antriebsanordnung vorgenommen werden. Hierbei könnte das Wartungsgerät z.B. über einen Datenbus mit der Torsteuerung kommunizieren und Prüfbewegungen auslösen sowie die dabei gewonnen Wartungsinformationen an die Torsteuerung übermitteln, die ihrerseits diese Daten zur Führung eines elektronischen Prüfbuches speichert und/oder an einen externen Speicher unter Nutzung kabelgebundener oder kabelloser Datenübertragungsmittel weitergibt.

In besonders vorteilhafter Weise sind mindestens ein Drehgeber auf der Exzenterwelle und/oder mindestens ein Drehgeber auf der Abtriebswelle vorgesehen, die steuerungstechnisch mit der Torsteuereinrichtung verbunden sind. Durch den Vergleich mit in der Torsteuereinrichtung hinterlegten Werten ist es hierdurch auf einfache Weise möglich, die Endlagenpositionen des Tororgans zu ermitteln. Auch kann hierdurch gegebenenfalls ein Verschleiß der Antriebsanordnung und/oder der Getriebeanordnung bestimmt werden. Darüber hinaus könnte durch ständigen Vergleich der Winkelposition bei ausreichend Spiel auch das Auffahren des Torblattes auf ein Hindernis detektiert werden.

Auch kann es vorteilhaft sein, mindestens einen Geschwindigkeitssensor auf der Abtriebswelle vorzusehen. Hierdurch kann auf einfache Weise ein abruptes Stoppen des Tororgans, beispielsweise im Falle eines Hindernisaufpralles, detektiert werden und somit eine taktile Sicherheitseinrichtung ersetzt werden.

Um die Antriebsanordnung auf einfache Weise zu überwachen und auch warten zu können, können weitere Sensoren, wie ein Temperatursensor, ein Schwingungssensor, Drehmomentsensor, Strommessgerät, etc. im Bereich des Elektromotors vorgesehen sein. Ein Drehmomentsensor kann beispielsweise an einer Drehmomentstütze angeordnet sein und eine Federüberwachung einer Feder, die das Tor auf bekannte Weise ausbalanciert, vorsehen.

Der Elektromotor ist in vorteilhafter Weise ein DC-Motor. Hierdurch ist es möglich, die Antriebsanordnung an ein vorhandenes Haushalts-Stromnetz anzuschließen.

Dadurch das die mindestens zwei orbitierenden Zahnscheiben über Verbindungsmittel flexibel oder starr miteinander gekoppelt sind, ist eine besonders große Redundanz der Antriebsanordnung, selbst bei Bruch einer Zahnscheibe, gewährleistet.

Es ist darüber hinaus auch denkbar, dass der Elektromotor über ein Zugmittelgetriebe mit dem Exzenter-Zahnradgetriebe wirkverbunden ist, wodurch der Elektromotor einfacher ausgeführt werden kann und gegebenenfalls eine zusätzliche Übersetzung realisiert werden kann.

In einer weiteren vorteilhaften Ausführungsform können drei Zahnscheiben vorgesehen sein, die zueinander phasenverschoben orbietieren und durch drei Exzenterwellen antreibbar sind.

Die Aufgabe wird ebenfalls gelöst durch eine Torvorrichtung mit einer derartigen Antriebsanordnung, bei der eine Rahmenanordnung für das Tororgan vorgesehen ist, an dem die Antriebsanordnung angeordnet ist.

In vorteilhafter Weise sind weitere Sensoranordnungen, wie zum Beispiel eine Schaltleistenanordnung, ein Lichtgitter, ein 3D-Sensor vorgesehen, die kabellos steuerungstechnisch mit einer Torsteuereinrichtung verbunden sind. Je nach Anwendung sind natürlich auch kabelgebundene Anordnungen einzubeziehen.

Die Erfindung wird anhand neuer Zeichnung dargestellt. Hierbei zeigt:
Figur 1 in einer schematischen Ansicht eine Torvorrichtung mit einer Antriebsanordnung,
Figur 2 eine Seitenansicht einer nicht erfindungsgemäßen Antriebsanordnung,
Figur 3 eine Schnittansicht durch eine Getriebeanordnung der Antriebsanordnung aus Figur 2, und
Figur 4 eine schematische Ansicht einer erfindungsgemäßen Ausführungsform einer Getriebeanordnung.

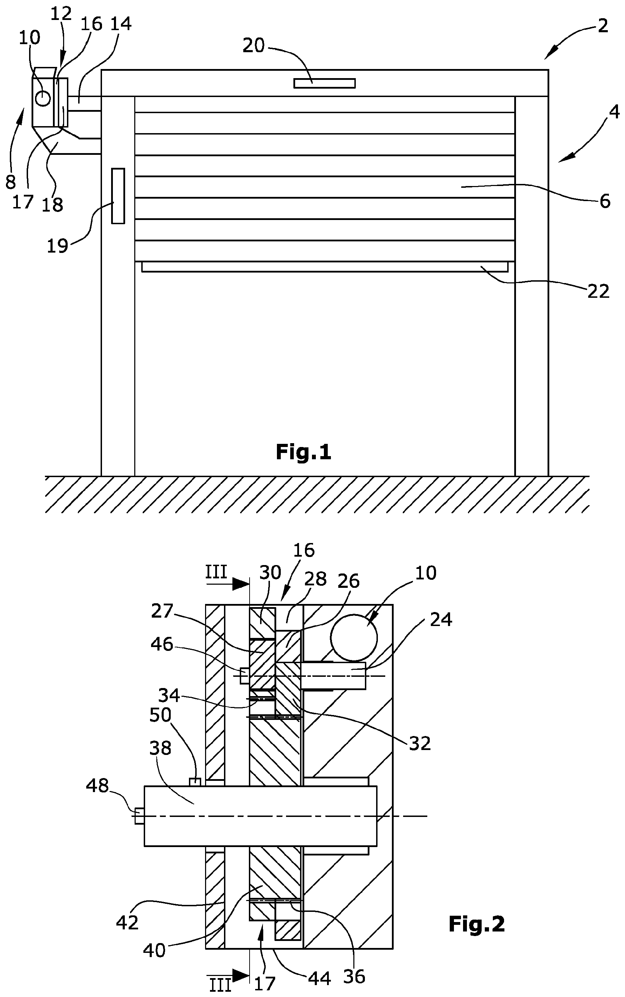

Figur 1 zeigt in einer schematischen Ansicht eine Torvorrichtung 2. Es sei hierbei angemerkt, dass unter dem Begriff "Torvorrichtung" jegliche Art von Verschlussorgan für eine Öffnung verstanden wird. Auf bekannte Weise besitzt diese Torvorrichtung 2 eine Rahmenanordnung 4 in der ein Tororgan 6 gleitend geführt ist. An der Rahmenanordnung 4 ist eine Antriebsanordnung 8 vorgesehen, die einen Elektromotor 10 und eine Getriebeanordnung 12 aufweist, wodurch eine Torwelle 14 antreibbar ist, sodass das Tororgan 6 von einem geschlossenen Zustand in einen offenen Zustand und vice versa überführt werden kann. Bei dem Elektromotor 10 handelt es sich im vorliegenden Ausführungsbeispiel um einen handelsüblichen DC-Motor. An den Elektromotor 10 schließt sich auf bekannte Weise ein Getriebe 16 an. Dieses Getriebe 16 kann als Schneckengetriebe mit Umlenkung oder aber auch als Zugmittelgetriebe ohne Umlenkung ausgeführt sein. Dieses Getriebe 16 und ein Exzenter-Zahnradgetriebe 17 bilden im vorliegenden Fall die Getriebeanordnung 12 aus. Die Antriebsanordnung 8 und die Getriebeanordnung 12 sind hierbei auf einer Drehmomentstütze 18 vorgesehen, die auf bekannte Weise fest mit der Rahmenanordnung 4 verbunden ist. Im Falle, dass das Getriebe 16 als Zugmittelgetriebe ausgeführt ist, kann die Antriebsanordnung 8 beabstandet von der Torwelle 14 angeordnet sein. Auch ist es denkbar, dass eine hier nicht weiter dargestellte Motorantriebswelle der Antriebsanordnung 8 direkt mit dem Exzenter-Zahnradgetriebe 17 verbunden ist.

In der vorliegenden Ansicht ist das Tororgan 6 in einer Zwischenposition dargestellt. Des Weiteren ist eine Torsteuereinrichtung 19 dargestellt, die drahtlos über Bluetooth und/oder W-LAN mit dem Elektromotor 10, mit einem 3D-Sensor 20 und mit einer Sicherheitsschaltleiste 22 kabellos verbunden ist. Der 3D-Sensor 20 dient hierbei zur berührungslosen Überwachung einer Umgebung des Tororgans 6. Die Sicherheitsschaltleiste 22 ist ein taktiles Sicherheitselement und dient auf bekannte Weise einer Hindernisüberwachung und stoppt eine Bewegung des Tororgans 6 bei Auftreffen auf ein Hindernis.

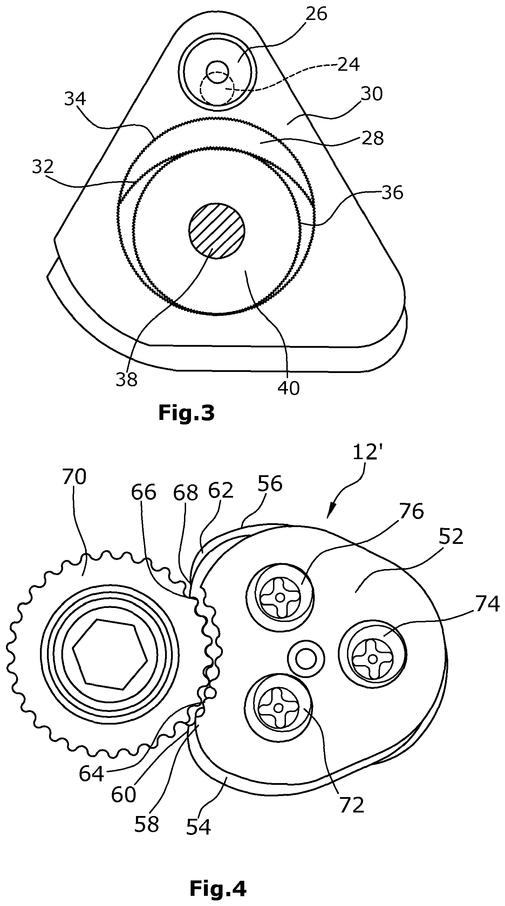

Figur 2 zeigt eine erste nicht erfindungsgemäße Ausführungsform der Antriebsanordnung 8 aus Figur 1 in einer geschnittenen Teilansicht. Der hier nicht dargestellte Elektromotor 10 ist auf bekannte Weise über das Getriebe 16 mit einer Antriebswelle 24 wirkverbunden, die als Exzenterwelle 24 mit zwei Exzentern 26, 27 ausgebildet ist. Diese Exzenter 26, 27 sind in zwei phasenverschobenen, um einen Winkel von 180° versetzt zueinander angeordneten, orbitierenden Zahnscheiben 28, 30 beweglich gelagert. Diese Zahnscheiben 28, 30 weisen jeweils eine Innenverzahnung 32, 34, die in Figur 3 näher dargestellt sind, und die auf eine Außenverzahnung 36 einer drehfest mit einer Abtriebswelle 38 verbundenen dritten Zahnscheibe 40 angreifen. Die Abtriebswelle 38 kann hierbei als Durchgangshohlwelle ausgeführt sein und ist hier lediglich schematisch dargestellt. Abgeschlossen wird die Getriebeanordnung 16 durch ein Deckelteil 42, das mit einem Wandteil 44 die Zahnscheiben 28, 30 übergreift und das Teil einer Gehäuseanordnung der Antriebsanordnung 8 ist.

Figur 3 zeigt nun eine Schnittansicht durch die Zahnscheibe 28. Deutlich zu erkennen ist hier der Zahnangriff der Zahnscheibe 28 auf die Zahnscheibe 40, wobei sehr viele Zähne in Eingriff stehen und folglich eine sichere Drehmomentübertragung gewährleisten. Abhängig von der Zähnezahldifferenz der Zahnscheiben 28, 30 und der Zahnscheibe 40 kann die Übersetzung von Antriebswelle 24 zu Abtriebswelle 38 eingestellt werden. Um das zu übertragende Drehmoment zu erhöhen, können auch mehrere Elektromotoren mit mehreren Exzenterwellen eingesetzt werden.

Um die Funktionalität und Sicherheit der Antriebsanordnung 8 bzw. der Torvorrichtung 2 weiter zu erhöhen, können beispielsweise Drehgeber 46, 48 auf der Exzenterwelle 24 und der Abtriebswelle 38 vorgesehen sein. Diese Drehgeber 46, 48 sind steuerungstechnisch mit der Torsteuereinrichtung 18 verbunden, sodass über eine Veränderung des Umdrehungsverhältnisses zueinander beispielsweise ein Verschleiß der Antriebsanordnung 8 ermittelt werden kann. Auch kann beispielsweise ein Geschwindigkeitssensor 50 auf der Abtriebswelle 38 vorgesehen sein (siehe hierzu Figur 2), durch den beispielsweise ein Aufprall auf ein Hindernis detektiert werden kann. Die in Figur 1 dargestellte Schaltleiste 22 könnte dann auch wegfallen. Zusätzlich können an der Antriebsanordnung 8 und hierbei insbesondere im Bereich des Elektromotors 10 weitere Sensoren, wie ein Temperatursensor, ein Schwingungssensor, etc. vorgesehen sein, um Abnormalitäten des Elektromotors 10 sowie der Antriebsanordnung 8 zu erkennen.

Eine schematische Ansicht einer erfindungsgemäßen Ausführung einer Getriebeanordnung 12' ist in Figur 4 dargestellt. Diese Getriebeanordnung 12' weist drei Zahnscheiben 52, 54, 56 auf, die jeweils an einer Außenseite 58, 60, 62 eine teilringförmige Innenverzahnung 64, 66, 68 besitzen. In der gezeigten Ansicht ist gerade das Zahnrad 54 über seine Innenverzahnung 66 mit der Abtriebswelle 70 in Eingriff. Angetrieben werden die Zahnscheiben 52, 54, 56 durch drei Exzenterwellen 72, 74, 76.

## Patentansprüche

1. Antriebsanordnung für eine Torvorrichtung (2) mit mindestens einem Elektromotor (10), der mit einer Getriebeanordnung (12') gekoppelt ist, die eine Torwelle (14) antreibt, um ein Tororgan (6) der Torvorrichtung (2) von einem geschlossenen Zustand in einen offenen Zustand und vice versa zu überführen, **dadurch gekennzeichnet, dass** die Getriebeanordnung (12') ein Exzenter-Zahnradgetriebe (17) aufweist, wobei mindestens zwei orbitierende Zahnscheiben ( 52, 54, 56), die durch mindestens eine Exzenterwelle ( 72, 74, 76) des mindestens einen Elektromotors (10) antreibbar sind, über eine Innenverzahnung ( 64, 66, 68) auf eine Abtriebswelle ( 70), die mit der Torwelle (2) wirkverbunden ist, angreifen, wobei die Zahnscheiben (52, 54, 56) eine an einer Außenseite (58, 60, 62) vorgesehene Innenverzahnung (64, 66, 68) aufweisen, die jeweils teilkreisförmig ausgebildet ist.

2. Antriebsanordnung nach Anspruch 1, **dadurch gekennzeichnet, dass** die Zahnscheiben ( 52, 54, 56) gleichläufig oder phasenverschoben angeordnet sind.

3. Antriebsanordnung nach Anspruch 1 oder 2, **dadurch gekennzeichnet, dass** eine Torsteuereinrichtung (19), die steuerungstechnisch zumindest mit dem Elektromotor (10) verbunden ist, vorgesehen ist.

4. Antriebsanordnung nach Anspruch 3, **dadurch gekennzeichnet, dass** die Torsteuereinrichtung (19) kabellos, beispielsweise über W-LAN, Bluetooth, bedienbar beziehungsweise auslesbar ist.

5. Antriebsanordnung nach Anspruch 3 oder 4, **dadurch gekennzeichnet, dass** mindestens ein Drehgeber (46) auf der Exzenterwelle (24) und/oder mindestens ein Drehgeber (48) auf der Abtriebswelle ( 70) vorgesehen sind, die steuerungstechnisch mit der Torsteuereinrichtung (19) verbunden sind.

6. Antriebsanordnung nach einem der Ansprüche 3 - 5 **dadurch gekennzeichnet, dass** mindestens ein Geschwindigkeitssensor (50) auf der Abtriebswelle (70) vorgesehen ist.

7. Antriebsanordnung nach Anspruch 5 oder 6, **dadurch gekennzeichnet, dass** weitere Sensoren, wie ein Temperatursensor, ein Schwingungssensor, Drehmomentsensor, Strommessgerät, etc. im Bereich der Antriebsanordnung (8) vorgesehen sind.

8. Antriebsanordnung nach einem der vorhergehenden Ansprüche, **dadurch gekennzeichnet, dass** der Elektromotor (10) ein DC-Motor ist.

9. Antriebsanordnung nach einem der vorhergehenden Ansprüche, **dadurch gekennzeichnet, dass** die mindestens zwei orbitierenden Zahnscheiben ( 52, 54, 56) über Verbindungsmittel flexibel oder starr miteinander gekoppelt sind.

10. Antriebsanordnung nach einem der vorhergehenden Ansprüche, **dadurch gekennzeichnet, dass** der Elektromotor (10) über ein Zugmittelgetriebe mit dem Exzenter-Zahnradgetriebe (17) wirkverbunden ist.

11. Antriebsanordnung nach einem der vorhergehenden Ansprüchen, **dadurch gekennzeichnet, dass** drei Zahnscheiben (52, 54, 56) vorgesehen sind, die zueinander phasenverschoben orbitieren und durch drei Exzenterwellen (72, 74, 76) antreibbar sind.

12. Torvorrichtung mit einer Antriebsanordnung (8) nach einem der vorhergehenden Ansprüche, **dadurch gekennzeichnet, dass** eine Rahmenanordnung (4) für das Tororgan (6) vorgesehen ist, an dem die Antriebsanordnung (8) angeordnet ist.

13. Torvorrichtung nach Anspruch 12, **dadurch gekennzeichnet, dass** weitere Sensoranordnungen, wie zum Beispiel eine Schaltleistenanordnung, ein Lichtgitter, ein 3D-Sensor vorgesehen sind, die kabellos steuerungstechnisch mit einer Torsteuereinrichtung (19) verbunden sind.

## Claims

1. Drive arrangement for a gate device (2) with at least one electric motor (10) which is coupled to a gear arrangement (12') that drives a gate shaft (14) in order to move a gate member (6) of the gate device (2) from a closed state to an open state and vice versa, **characterized in that** the gear arrangement (12') comprises an eccentric cogwheel gear (17), wherein at least two orbiting toothed discs (52, 54, 56), which can be driven by at least one eccentric shaft (72, 74, 76) of the at least one electric motor (10), engage via internal teeth (64, 66, 68) on an output shaft (70) which is operatively connected to the gate shaft (2), wherein the toothed discs (52, 54, 56) have internal teeth (64, 66, 68) provided on an outer side (58, 60, 62), which are each designed to be partial circles.

2. Drive arrangement according to claim 1, **characterized in that** the toothed discs (52, 54, 56) are arranged to rotate in phase or phase-shifted.

3. Drive arrangement according to claim 1 or 2, **characterized in that** a gate control device (19) is provided, which is connected at least to the electric motor (10) for control purposes.

4. Drive arrangement according to claim 3, **characterized in that** the gate control device (19) can be operated or read wirelessly, for example via Wi-Fi or Bluetooth.

5. Drive arrangement according to claim 3 or 4, **characterized in that** at least one rotary encoder (46) is provided on the eccentric shaft (24) and/or at least one rotary encoder (48) is provided on the output shaft (70), which are connected to the gate control device (19) for control purposes.

6. Drive arrangement according to one of claims 3-5, **characterized in that** at least one speed sensor (50) is provided on the output shaft (70).

7. Drive arrangement according to claim 5 or 6, **characterized in that** further sensors, such as a temperature sensor, a vibration sensor, a torque sensor, a current measuring device, etc., are provided in the area of the drive arrangement (8).

8. Drive arrangement according to one of the preceding claims, **characterized in that** the electric motor (10) is a DC motor.

9. Drive arrangement according to one of the preceding claims, **characterized in that** the at least two orbiting toothed discs (52, 54, 56) are flexibly or rigidly coupled to each other via connecting means.

10. Drive arrangement according to one of the preceding claims, **characterized in that** the electric motor (10) is operatively connected to the eccentric cogwheel gear (17) via a traction drive gear.

11. Drive arrangement according to one of the preceding claims, **characterized in that** three toothed discs (52, 54, 56) are provided, which orbit phase-shifted relative to each other and can be driven by three eccentric shafts (72, 74, 76).

12. Gate device with a drive arrangement (8) according to one of the preceding claims, **characterized in that** a frame arrangement (4) is provided for the gate member (6), on which the drive arrangement (8) is arranged.

13. Gate device according to claim 12, **characterized in that** further sensor arrangements, such as a switch strip arrangement, a light grid, or a 3D sensor, are provided, which are connected wirelessly to a gate control device (19) for control purposes.

## Revendications

1. Agencement d'entraînement pour un dispositif de porte (2) avec au moins un moteur électrique (10), qui est couplé à un agencement de transmission (12'), qui entraîne un arbre de porte (14), pour faire passer un organe de porte (6) du dispositif de porte (2) d'un état fermé à un état ouvert et vice versa, **caractérisé en ce que** l'agencement de transmission (12') comprend une transmission à engrenage excentrique (17), dans laquelle au moins deux disques dentés orbitants (52, 54, 56), qui peuvent être entraînés par au moins un arbre excentrique (72, 74, 76) du au moins un moteur électrique (10), viennent en prise par l'intermédiaire d'une denture intérieure (64, 66, 68) sur un arbre de sortie (70), qui est en liaison fonctionnelle avec l'arbre de porte (2), dans lequel les disques dentés (52, 54, 56) comprennent une denture intérieure (64, 66, 68) prévue sur un côté extérieur (58, 60, 62), qui est respectivement réalisée sous forme partiellement circulaire.

2. Agencement d'entraînement selon la revendication 1, **caractérisé en ce que** les disques dentés (52, 54, 56) sont disposés de manière identique ou déphasée.

3. Agencement d'entraînement selon la revendication 1 ou 2, **caractérisé en ce qu'**un dispositif de commande de porte (19), qui est en liaison de commande au moins avec le moteur électrique (10), est prévu.

4. Agencement d'entraînement selon la revendication 3, **caractérisé en ce que** le dispositif de commande de porte (19) est sans fil réglable ou lisible, par exemple par l'intermédiaire de W-LAN, Bluetooth.

5. Agencement d'entraînement selon la revendication 3 ou 4, **caractérisé en ce qu'**au moins un rotateur (46) sur l'arbre excentrique (24) et/ou au moins un rotateur (48) sur l'arbre de sortie (70) sont prévus, qui sont connecté au moyen de commande avec le dispositif de commande de porte (19).

6. Agencement d'entraînement selon l'une des revendications 3 à 5, **caractérisé en ce qu'**au moins un capteur de vitesse (50) est prévu sur l'arbre de sortie (70).

7. Agencement d'entraînement selon la revendication 5 ou 6, **caractérisé en ce que** d'autres capteurs, tels qu'un capteur de température, un capteur d'oscillation, un capteur de couple, un appareil de mesure de courant, etc., sont prévus dans la zone de l'agencement d'entraînement (8).

8. Agencement d'entraînement selon l'une des revendications précédentes, **caractérisé en ce que** le moteur électrique (10) est un moteur à courant continu.

9. Agencement d'entraînement selon l'une des revendications précédentes, **caractérisé en ce que** les au moins deux disques dentés orbitants (52, 54, 56) sont couplés entre eux de manière flexible ou rigide par l'intermédiaire de moyens de liaison.

10. Agencement d'entraînement selon l'une des revendications précédentes, **caractérisé en ce que** le moteur électrique (10) est en liaison fonctionnelle avec la transmission à engrenage excentrique (17) par l'intermédiaire d'une transmission à traction.

11. Agencement d'entraînement selon l'une des revendications précédentes, **caractérisé en ce que** trois disques dentés (52, 54, 56) sont prévus, qui orbitent de manière déphasée les uns par rapport aux autres et peuvent être entraînés par trois arbres excentriques (72, 74, 76).

12. Dispositif de porte avec un agencement d'entraînement (8) selon l'une des revendications précédentes, **caractérisé en ce qu'**un agencement de cadre (4) pour l'organe de porte (6) est prévu, sur lequel l'agencement d'entraînement (8) est disposé.

13. Dispositif de porte selon la revendication 12, **caractérisé en ce que** d'autres agencements de capteurs, tels que par exemple un agencement de puissance de commutation, une grille lumineuse, un capteur 3D, sont prévus, qui sont connectés au moyen de commande avec un dispositif de commande de porte (19).
